# EUROPEAN PATENT SPECIFICATION

(11) **EP 4 412 971 B1**
(45) Date of publication and mention of the grant of the patent: **03.06.2026**
(21) Application number: 22789320.3
(22) Date of filing: 07.10.2022
(51) Int. Cl.: C04B 41/50, C04B 41/00, C04B 41/86, A01N 59/16, A01P 1/00, C03C 3/093, C03C 8/12, C03C 8/16

(54) **COMPOSITION FOR COATING A SANITARY WARE**
ZUSAMMENSETZUNG ZUR BESCHICHTUNG EINES SANITÄRARTIKELS
COMPOSITION DE REVÊTEMENT D'UN ARTICLE SANITAIRE

(30) Priority: 07.10.2021 EP 21201368; 22.12.2021 EP 21216824
(43) Date of publication of application: 14.08.2024
(73) Proprietor: Better Life SA, 1201 Geneve (CH)
(72) Inventor: BAPTISTA, Frederico, 1201 Genève (CH); ANTUNES, Filipe, 1201 Genève (CH); DA COSTA, Damien, 1201 Genève (CH)
(74) Representative: KATZAROV S.A.
(86) International application number: PCT/IB2022/059605
(87) International publication number: WO 2023/057974

(56) References cited:
- WO-A1-2008/103621
- CN-A- 102 132 705

## Description

### Technical Field

The present invention relates to a composition for coating a device, for instance a sanitary ware and to a device coated by said composition.

### Description of the invention

The recent COVID-19 pandemic and the setting of health protocols in each country highlighted the importance of maintaining high hygiene standard to tackle the spreading of a virus or a bacteria. This is of utmost importance when it comes to sanitary ware in particular sanitary ware in public sites, that could facilitate the spreading of a virus or a disease.

CN102132705A discloses an antibacterial ceramic glaze composition containing a silver antibacterial powder made by reacting particles of hydroxyapatite and silver nitrate.

The present invention aims at providing a new resistant and easy-to-clean hydrophobic-like coating composition, for instance a sanitaryware glaze, with antibacterial properties.

The present invention concerns a composition for coating a device (or a coating composition or namely a composition) and a composition coated on a device. In other words, the present invention concerns a composition configured for being coated on a device and a composition that is coated on a device. The composition and the composition coated share some features, notable when some solid components are found in both compositions preferably all solid components are identical.

In a first aspect, the composition, before being applied or coated on a device, comprises between 20% w/w and 60 % w/w of an aqueous solution, preferably water, and between 40 % w/w and 80 % w/w of solid components, said solid components comprising
between 50 % w/w and 70 % w/w of ceramic frit,
between 5 % w/w and 15 % w/w kaolin,
between 5 % w/w and 15 % w/w zinc oxide or zirconium oxide,
between 5 % w/w and 15 % w/w calcium carbonate,
between 5 % w/w and 15 % w/w hydroxyapatite,
between 0.1 % w/w and 5 % w/w silver nitrate,
optionally up to 10 % w/w calcium fluoride,
optionally up to 15 % w/w copper oxide, and
optionally up to 2 % of additives, for instance rare earth element.

Alternatively, the present invention also concerns a composition coated on a device, for instance a sanitary ware, the composition comprising
between 50 % w/w and 70 % w/w of ceramic frit,
between 5 % w/w and 15 % w/w kaolin,
between 5 % w/w and 15 % w/w zinc oxide or zirconium oxide,
between 5 % w/w and 15 % w/w calcium carbonate,
between 5 % w/w and 15 % w/w hydroxyapatite,
between 0.1 % w/w and 5 % w/w silver nitrate,
optionally up to 10 % w/w calcium fluoride,
optionally up to 15 % w/w copper oxide, and
optionally up to 2 % of additives, for instance rare earth element.

In this first aspect, the solid components (of the composition before and after heating) comprise ceramic frit, kaolin, zinc oxide or zirconium oxide, calcium carbonate, hydroxyapatite, silver nitrate.

The composition is configured for being cured or heated after its application on a device to provide a device at least partially coated with the composition, i.e coated composition.

The present invention concerns the composition before heating and the composition after heating. The main difference between the composition before heating and after heating concerns the aqueous solution, for instance water. The heating allows to remove the great majority or preferably all the aqueous solution from the composition. The solid components (and preferably their relative proportions) of the composition and of the composition coated on the device are substantially similar, preferably identical. Therefore, the embodiments related to the solid components of the composition (to be coated) also apply to the composition coated on a device.

The present composition has several advantages such as reduction of water consumption, antibacterial effect, and better hygienic properties.

The coating composition of the present invention is in particular advantageous for coating a sanitary ware, but the invention is not limited to this application.

Advantageously, the composition according to the present invention exhibited higher water contact angle than that exhibited by the existing glazed sanitaryware products which support an enhanced hydrophobicity compared to the existing products.

The composition according to the present invention presents improved antibacterial properties compared to the existing glazed sanitaryware products.

Other properties are an improved adhesion of the glaze (or the coated composition) to the substrate (namely green body).

The coated device (i.e. the cured composition, for instance the glaze or enamel) exhibits a white, bright, and smooth surface, with low roughness.

Advantageously, the coated device also exhibits an improved resistance, notably to abrasive treatments and manual scrubbing.

The coating composition is preferably composed of non-toxic materials since the coating is configured for being contacted with the skin of a user.

The composition is configured for being applied on a portion of a device, for instance on an area of the surface (or a substrate of the surface) of the device or on the whole surface of the device.

The coating composition (before heating) comprises an aqueous solution and some solid component. The aqueous solution preferably comprises a majority of water, preferably the aqueous solution is constituted by water.

Preferably the coating composition is a suspension or an heterogenous composition that should be mixed to solubilize the solid components in the aqueous solution.

Ceramic frit is a mix of component comprises a majority of SiO₂. For instance, the ceramic frit comprises the following components: SiO₂ (55 %) Al₂O₃ (7%), K₂O (5%), CaO (8%), B₂O₃ (11 %) ZrO (6%) Na₂O (1%) and ZnO (2 %).

Kaolin is also a component that comprises mineral kaolinite Al₂Si₂O₅(OH)₄.

Hydroxyapatite is a calcium phosphate-based component that comprises Ca₁₀ (PO₄)₆ (OH)₂.

Advantageously, the porous structure of hydroxyapatite allows the silver ions to be kept within the hydroxyapatite structure preventing them from dispersing through the substrate. Thus, the silver ions are kept at the surface and provide consequently permanent or at least long-term antibacterial properties.

Preferably, the zinc oxide can be replaced by zirconium oxide.

Preferably, the composition further comprises calcium fluoride in an amount of up to 10 % w/w %.

Preferably the composition further comprises copper oxide in an amount of up to 15 % w/w %.

Preferably, the composition further comprises up to 2 % of additives, for instance rare earth element.

In a preferred aspect, the composition according to any of the above-described aspects further comprises a surfactant. The surfactant can be anionic, non-ionic, cationic or amphoteric. Preferably, the surfactant is selected from the group consisting of Sodium dodecyl sulfate, Sodium decyl sulfate, Sodium tetradecyl sulfate, Sodium myreth sulfate, Sodium pareth sulfate, Sodium lauryl phosphate, Sodium oleate, Polyoxyethylene sorbitan monooleate, Polyoxyethylene sorbitan monostearate, Polyoxyethylene sorbitan monopalmitate, Polyoxyethylene sorbitan monolaurate Polyoxyethylene sorbitan trioleate, Sorbitan monostearate, Sorbitan monooleate, Sorbitan monolaurate, Tetradecyltrimethylammonium bromide, Hexadecyltrimethylammonium bromide, Decyltrimethylammonium bromide, Dodecyltrimethylammonium bromide, Tetradecyltrimethylammonium chloride, Hexadecyltrimethylammonium chloride, Decyltrimethylammonium chloride, Dodecyltrimethylammonium chloride, cocamidopropyl betaine, lecithin and mixtures thereof.

In a specific embodiment of the invention the surfactant is an anionic surfactant, preferably selected from alkyl sulfates, alkyl-ether sulfates, alkyl phosphates, alkyl-ether phosphates, oleates and mixtures thereof, more preferably the anionic surfactant is selected from the group consisting of alkyl sulfates, alkyl-ether sulfates, alkyl phosphates, oleates and mixtures thereof. In a preferred embodiment, the anionic surfactant is selected from the group consisting of Sodium dodecyl sulfate, Sodium decyl sulfate, Sodium tetradecyl sulfate, Sodium myreth sulfate, Sodium pareth sulfate, Sodium lauryl phosphate, Sodium oleate and mixtures thereof. Most preferably the anionic surfactant is selected from Sodium dodecyl sulfate, Sodium decyl sulfate and mixtures thereof.

In another specific aspect, the surfactant is a non-ionic surfactant, preferably a fatty acid ester of sorbitol, more preferably selected from sorbitans, polysorbates and mixtures thereof. In a preferred aspect, the fatty acid ester of sorbitol is selected from the group consisting of Polyoxyethylene sorbitan monooleate, Polyoxyethylene sorbitan monostearate, Polyoxyethylene sorbitan monopalmitate, Polyoxyethylene sorbitan monolaurate Polyoxyethylene sorbitan trioleate, Sorbitan monostearate, Sorbitan monooleate, Sorbitan monolaurate. Most preferably, the fatty acid ester of sorbitol is selected from Polyoxyethylene sorbitan monostearate, Polyoxyethylene sorbitan monooleate and mixtures thereof.

In still another specific aspect, the surfactant is a cationic surfactant, preferably selected from permanently charged quaternary ammonium salts. In a preferred embodiment, the cationic surfactant is selected from the group consisting of Tetradecyltrimethylammonium bromide, Hexadecyltrimethylammonium bromide, Decyltrimethylammonium bromide, Dodecyltrimethylammonium bromide, Tetradecyltrimethylammonium chloride, Hexadecyltrimethylammonium chloride, Decyltrimethylammonium chloride, Dodecyltrimethylammonium chloride and mixtures thereof. Most preferably, the cationic surfactant is selected from Hexadecyltrimethylammonium bromide, Decyltrimethylammonium bromide and mixtures thereof.

In yet another specific aspect, the surfactant is an amphoteric surfactant, preferably selected from betaines, most preferably selected from cocamidopropyl betaine, lecithin and mixtures thereof.

The presence of a surfactant, such as described above, in the aqueous solution advantageously enables to control the viscosity of the composition according to the present invention and preferably to reduce the viscosity of the composition before application to the surface. A decrease in viscosity is advantageous in that it improves the conditions of the application of the composition on a substrate, such as sanitary ware, be it by spraying or by immersion.

The surfactant is preferably present in an amount of between 0.1 % w/w and 5 % w/w. For example, the surfactant is present in an amount of at least 0.5 % w/w, at least 1 % w/w, at least 1.5 % w/w, at least 2 % w/w, at least 2.5 % w/w, or at least 3% w/w, based on the total weight of the solid components, or the surfactant is present in an amount of up to 4.5 % w/w, up to 4 % w/w, up to 3.5 % w/w, up to 3 % w/w, up to 2.5 % w/w, up to 2 % w/w, up to 1.5 % w/w or up to 1 % w/w, based on the total weight of the solid components. Preferably, the surfactant is present in an amount between 0.1 % w/w and 4.5 % w/w, more preferably between 0.1 % w/w and 4 % w/w, more preferably between 0.1 % w/w and 3.5 % w/w, more preferably between 0.1 % w/w and 3 % w/w, more preferably between 0.1 % w/w and 2.5 % w/w, more preferably between 0.1 % w/w and 2 % w/w even more preferably between 0.1 and 1.5 % w/w based on the total weight of the solid components. In another preferred aspect, the surfactant is present in an amount of between 0.5 % w/w and 4.5 % w/w, more preferably between 0.5 % w/w and 4 % w/w, more preferably between 0.5 % w/w and 3.5 % w/w, more preferably between 0.5 % w/w and 3 % w/w, more preferably between 0.5 % w/w and 2.5 % w/w, more preferably between 0.5 % w/w and 2 % w/w even more preferably between 0.5 and 1.5 % w/w based on the total weight of the solid components.

Such amounts lead to optimal viscosity and therefore optimizes the advantages of using a surfactant, in terms of ease of application of the composition.

In a preferred aspect, the composition before being applied or coated on a device is characterized by a viscosity of 0.139 Kg/m/s to 0.377 Kg/m/s, as measured using a flow cup viscosimeter. By this method, a specific volume of composition, such as 100 mL, flows through an orifice of defined size, such as a diameter of 4 mm. The time required for the whole volume to flow through the orifice is measured and converted to viscosity.

In another preferred aspect, the composition before being applied or coated on a device is characterized by a density of 1500 to 2000 g/L, preferably 1700 to 1800 g/L, preferably measured using a pycnometer, more preferably a metal cup pycnometer. Such density range is advantageous in that it provides optimal coverage of the substrate, such as the sanitary ware, with the composition of the invention.

Preferably, the composition is for coating a device, for instance a sanitary ware.

A method for coating a device with a coating composition according to the present invention, comprises
- mixing the aqueous solution and the solid components of the composition to obtain a homogenous composition;
- applying the homogenous coating composition on a portion of the device to be coated;
- drying the coated portion at a temperature between 15°C and 25°C during between 2 hours and 12 hours,
- curing the coated portion at a temperature between 400 °C and 1300 ºC during 15 min and 45 min;
- cooling the coated portion to a temperature between 5°C and 50°C during between 6 hours and 24 hours.

Preferably, the cooling step is carried out in the air.

### Brief description of the drawings

Further particular advantages and features of the invention will become more apparent from the following non-limitative description of at least one embodiment of the invention which will refer to the accompanying figures (tables and plots), wherein
- Figure 1 is an embodiment of a coated sanitary ware;
- Figure 2 illustrates the hydrophobicity of a composition according to the present invention;
- Figures 3 illustrate the antibacterial properties of the composition according to the present invention
- Figures 4 illustrate the resistance to abrasive treatments of the composition according to the present invention;

### Detailed description of the invention

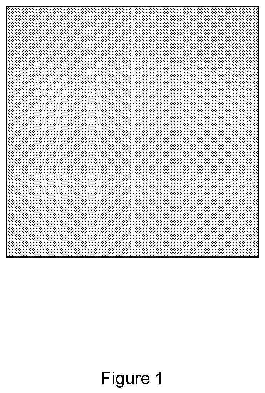

Figure 1 represents a composition coated on a device according to the present invention. In the present example, the composition coated on the device is a glaze or enamel coated on a sanitary ware. Figure 1 represents a portion of a sanitary ware piece coated with a composition according to the present invention and obtained after the firing or curing step. The portions shown in figure 1 exhibits a white and glossy surface similar with the common sanitary ware, meaning coated sanitary ware.

In a first present example, in a first step a composition was prepared to be applied in a second step on the surface of the sanitary ware and subsequently cured to obtain a coated device, namely a sanitary ware coated with a glaze.

The composition to be applied on the surface in this embodiment is the following (in w/w %): water (40%) and solid component (60%), the solid components comprising ceramic frit (60 %), kaolin (10 %), calcium carbonate (10 %), zinc oxide (10 %), hydroxyapatite (9 %) and silver nitrate (1 %).

The composition was subsequently mixed to homogenize the composition (water and solid components) before the application on the surface of the sanitary ware.

The homogenized composition was then applied on the surface of the sanitary ware, i.e. on a substrate, to obtain a layer of 0.2 mm.

After drying at 20 °C for 16 hours (or room temperature), the sanitary ware was cured (or heated) at a temperature of 1050 °C for 30 min. The sanitary device was then cooled to a temperature of 20 °C during 12 hours. The obtained sanitary ware exhibits a white smooth and glossy surface as shown in Figure 1.

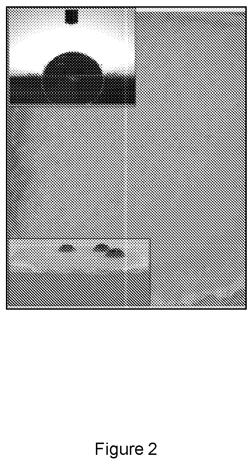

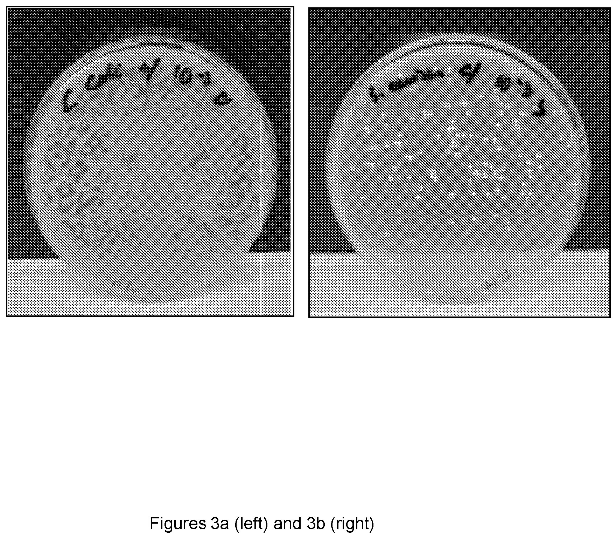

Figure 2 illustrate the hydrophobicity and antibacterial properties of the sanitary ware shown in figure 1. The measurements were made by contact angle analysis of the sanitaryware surface, and bacterial colony forming count, respectively. As shown in figure 3.

Regarding the contact angle analysis, three drops of water were placed on the surface of the sanitary ware coated with the glaze. The shape of a water droplet represents the hydrophobicity of the surface. The water contact angle was measured by contact angle tensiometry. In the present case, the water contact angle is 80 degrees which demonstrate a relevant hydrophobicity of the glaze coated surface.

Figure 3 represents a comparison between conventional sanitaryware (left) and the sanitaryware (right) according to the present invention illustrated in figure 1. The bacterial colonies (yellow) are tremendously reduced on the right figure. The antibacterial tests were performed by adapting the protocol described in the ISO 22196. Firstly, the four ceramic substrates were inoculated with 400 µL of the S. aureus and E. coli., which induces a number of colony forming units per millilitre (CFU/mL) of 6.6 X 106 CFU/mL. The four samples were then incubated at 37 °C for a period of 24 hours. After that period the four samples were washed with 2 mL of physiological serum and three dilutions were made from each sample. Then, 100 µL of the final dilution was poured into a nutrient medium and the samples were allowed to incubate at 37 °C during 24 hours. This process was done in triplicate. To determine the antibacterial efficiency the number of bacterial colonies in all samples were counted. In order to be statistical accurate, the number of colonies must be between 30 and 300 colonies. By counting the number of viable colonies in the two different samples containing the antibacterial agent it was possible to determined the antibacterial efficiency of the sanitaryware glaze. The results showed that the sanitary glaze surface exhibits antibacterial properties. The antibacterial efficiency was determined to be 98.9 % against S. coli., and 97.7 % against S. aureus bacteria (Figure 3).

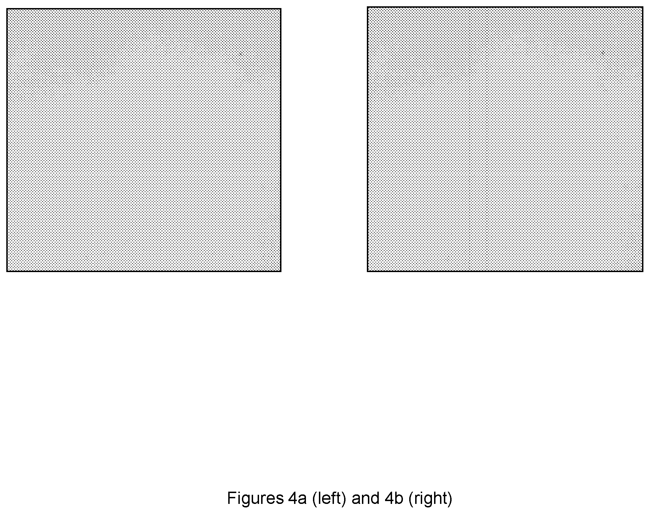

Figures 4 shown the resistance of the coated sanitary ware to abrasive treatments such as cleaning products and manual scrubbing with hard brushes. Figures 4 illustrate a comparison between a coated surface of a sanitary device without any abrasive treatments and manual scrubbing in the left figure 4a and the same coated surface of a sanitary device after abrasive treatments and manual scrubbing in the right figure 4b. As shown in figures 4a and 4b, there is no visible degradation or damage of the coated surface after abrasive treatments and manual scrubbing which demonstrate the improved resistance of the coated surface.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This for example particularly the case regarding the different apparatuses which can be used.

## Claims

1. Composition comprising
between 20% w/w and 60 % w/w of an aqueous solution, preferably water, and between 40 % w/w and 80 % w/w of solid components,
said solid components comprising
between 50 % w/w and 70 % w/w of ceramic frit,
between 5 % w/w and 15 % w/w kaolin,
between 5 % w/w and 15 % w/w zinc oxide or zirconium oxide,
between 5 % w/w and 15 % w/w calcium carbonate,
between 5 % w/w and 15 % w/w hydroxyapatite,
between 0.1 % w/w and 5 % w/w silver nitrate,
optionally up to 10 % w/w calcium fluoride,
optionally up to 15 % w/w copper oxide, and
optionally up to 2 % of additives, for instance rare earth element.

2. Composition according to claim 1, further comprising between 0.1 and 5 % w/w of a surfactant.

3. Composition according to claim 2, wherein the surfactant is an anionic surfactant, preferably selected from alkyl sulfates, alkyl-ether sulfates, alkyl phosphates, alkyl-ether phosphates, oleates and mixtures thereof, more preferably selected from the group consisting of alkyl sulfates, alkyl-ether sulfates, alkyl phosphates, oleates and mixtures thereof, even more preferably selected from Sodium dodecyl sulfate, Sodium decyl sulfate, Sodium tetradecyl sulfate, Sodium myreth sulfate, Sodium pareth sulfate, Sodium lauryl phosphate, Sodium oleate and mixtures thereof, most preferably selected from Sodium dodecyl sulfate, Sodium decyl sulfate and mixtures thereof.

4. Composition according to claim 2, wherein the surfactant is a cationic surfactant, preferably selected from permanently charged quaternary ammonium salts, more preferably selected from the group consisting of Tetradecyltrimethylammonium bromide, Hexadecyltrimethylammonium bromide, Decyltrimethylammonium bromide, Dodecyltrimethylammonium bromide, Tetradecyltrimethylammonium chloride, Hexadecyltrimethylammonium chloride, Decyltrimethylammonium chloride, Dodecyltrimethylammonium chloride and mixtures thereof, most preferably selected from Hexadecyltrimethylammonium bromide, Decyltrimethylammonium bromide and mixtures thereof.

5. Composition according to claim 2, wherein the surfactant is a non-ionic surfactant, preferably a fatty acid ester of sorbitol, more preferably selected from sorbitans, polysorbates and mixtures thereof, even more preferably selected from the group consisting of Polyoxyethylene sorbitan monooleate, Polyoxyethylene sorbitan monostearate, Polyoxyethylene sorbitan monopalmitate, Polyoxyethylene sorbitan monolaurate Polyoxyethylene sorbitan trioleate, Sorbitan monostearate, Sorbitan monooleate, Sorbitan monolaurate, most preferably selected from Polyoxyethylene sorbitan monostearate, Polyoxyethylene sorbitan monooleate and mixtures thereof.

6. Composition according to claim 2, wherein the surfactant is an amphoteric surfactant, preferably selected from betaines, most preferably selected from cocamidopropyl betaine, lecithin and mixtures thereof.

7. Composition according to any one of claims 2 to 6, wherein the surfactant is present in an amount of between 0.1 % w/w and 4.5 % w/w, more preferably between 0.1 % w/w and 4 % w/w, more preferably between 0.1 % w/w and 3.5 % w/w, more preferably between 0.1 % w/w and 3 % w/w, more preferably between 0.1 % w/w and 2.5 % w/w, more preferably between 0.1 % w/w and 2 % w/w, more preferably between 0.1 and 1.5 % w/w, most preferably between 0.5 and 1.5 % w/w based on the total weight of the solid components.

8. Composition according to any one of claims 2 to 7, having a viscosity of 0.139 to 0.377 Kg/m/s, as measured with a Ford type flow cup viscometer.

9. Composition according to any one of claims 1 to 8, having a density of 1500 to 2000 g/L, preferably of 1600 to 1700 g/L.

10. Composition coated on a device, for instance a sanitary ware, the composition comprising
between 50 % w/w and 70 % w/w of ceramic frit,
between 5 % w/w and 15 % w/w kaolin,
between 5 % w/w and 15 % w/w zinc oxide or zirconium oxide,
between 5 % w/w and 15 % w/w calcium carbonate,
between 5 % w/w and 15 % w/w hydroxyapatite,
between 0.1 % w/w and 5 % w/w silver nitrate,
optionally up to 10 % w/w calcium fluoride,
optionally up to 15 % w/w copper oxide, and
optionally up to 2 % of additives, for instance rare earth element.

11. Composition according to claim 11, further comprising between 0.1 % w/w and 5 % w/w of a surfactant.

12. Device coated with a composition according to claim 11 or 12, wherein the device is chosen among sanitary wares.

## Patentansprüche

1. Zusammensetzung bestehend aus
zwischen 20 Gew.-% und 60 Gew.-% einer wässrigen Lösung, vorzugsweise Wasser, und zwischen 40 Gew.-% und 80 Gew.-% fester Bestandteile,
die festen Bestandteile, die
zwischen 50 Gew.-% und 70 Gew.-% keramische Fritte,
zwischen 5 Gew.-% und 15 Gew.-% Kaolin,
zwischen 5 Gew.-% und 15 Gew.-% Zinkoxid oder Zirkonoxid,
zwischen 5 Gew.-% und 15 Gew.-% Calciumcarbonat,
zwischen 5 Gew.-% und 15 Gew.-% Hydroxylapatit,
zwischen 0,1 Gew.-% und 5 Gew.-% Silbernitrat,
wahlweise bis zu 10 Gew.-% Calciumfluorid,
wahlweise bis zu 15 Gew.-% Kupferoxid und
wahlweise bis zu 2 % Additive, z.B. Seltene Erden
umfassen.

2. Zusammensetzung nach Anspruch 1, ferner mit einem Gehalt zwischen 0,1 und 5 Gew.-% eines Tensids.

3. Zusammensetzung nach Anspruch 2, wobei das Tensid ein anionisches Tensid ist, vorzugsweise ausgewählt aus Alkylsulfaten, Alkylethersulfaten, Alkylphosphaten, Alkyletherphosphaten, Oleaten und Mischungen davon, besonders bevorzugt ausgewählt aus der Gruppe bestehend aus Alkylsulfaten, Alkylethersulfaten, Alkylphosphaten, Oleaten und Mischungen davon, noch bevorzugter ausgewählt aus Natriumdodecylsulfat, Natriumdecylsulfat, Natriumtetradecylsulfat, Natriummyrethsulfat, Natriumparethsulfat, Natriumlaurylphosphat, Natriumoleat und Mischungen davon, am meisten bevorzugt ausgewählt aus Natriumdodecylsulfat, Natriumdecylsulfat und Mischungen davon.

4. Zusammensetzung nach Anspruch 2, wobei das Tensid ein kationisches Tensid ist, vorzugsweise ausgewählt aus permanent geladenen quartären Ammoniumsalzen, besonders bevorzugt ausgewählt aus der Gruppe bestehend aus Tetradecyltrimethylammoniumbromid, Hexadecyltrimethylammoniumbromid, Decyltrimethylammoniumbromid, Dodecyltrimethylammoniumbromid, Tetradecyltrimethylammoniumchlorid, Hexadecyltrimethylammoniumchlorid, Decyltrimethylammoniumchlorid, Dodecyltrimethylammoniumchlorid und Mischungen davon, am meisten bevorzugt ausgewählt aus Hexadecyltrimethylammoniumbromid, Decyltrimethylammoniumbromid und Mischungen davon.

5. Zusammensetzung nach Anspruch 2, wobei das Tensid ein nichtionisches Tensid ist, vorzugsweise ein Fettsäureester des Sorbits, besonders bevorzugt ausgewählt aus Sorbitanen, Polysorbaten und Mischungen davon, noch bevorzugter ausgewählt aus der Gruppe bestehend aus Polyoxyethylensorbitanmonooleat, Polyoxyethylensorbitanmonostearat, Polyoxyethylensorbitanmonopalmitat, Polyoxyethylensorbitanmonolaurat, Polyoxyethylensorbitantrioleat, Sorbitanmonostearat, Sorbitanmonooleat, Sorbitanmonolaurat, am meisten bevorzugt ausgewählt aus Polyoxyethylensorbitanmonostearat, Polyoxyethylensorbitanmonooleat und Mischungen davon.

6. Zusammensetzung nach Anspruch 2, wobei das Tensid ein amphoteres Tensid ist, vorzugsweise ausgewählt aus Betainen, am meisten bevorzugt ausgewählt aus Cocamidopropylbetain, Lecithin und Mischungen davon.

7. Zusammensetzung nach einem der Ansprüche 2 bis 6, wobei das Tensid in einer Menge zwischen 0,1 Gew.-% und 4,5 Gew.-%, mehr bevorzugt zwischen 0,1 Gew.-% und 4 Gew.-%, mehr bevorzugt zwischen 0,1 Gew.-% und 3,5 Gew.-%, mehr bevorzugt zwischen 0,1 Gew.-% und 3 Gew.-%, mehr bevorzugt zwischen 0,1 Gew.-% und 2,5 Gew.-%, mehr bevorzugt zwischen 0,1 Gew.-% und 2 Gew.-%, mehr bevorzugt zwischen 0,1 und 1,5 Gew.-%, am meisten bevorzugt zwischen 0,5 und 1,5 Gew.-%, vorliegt, bezogen auf das Gesamtgewicht der festen Bestandteile.

8. Zusammensetzung nach einem der Ansprüche 2 bis 7 mit einer Viskosität von 0,139 bis 0,377 Kg/m/s, gemessen mit einem Ford-Auslaufbecher Viskosimeter.

9. Zusammensetzung nach einem der Ansprüche 1 bis 8 mit einer spezifische Masse von 1500 bis 2000 g/L, vorzugsweise von 1600 bis 1700 g/L.

10. Zusammensetzung, die auf ein Gerät, z. B. eine Sanitärkeramik, aufgetragen ist, wobei die Zusammensetzung
zwischen 50 Gew.-% und 70 Gew.-% keramische Fritte,
zwischen 5 Gew.-% und 15 Gew.-% Kaolin,
zwischen 5 Gew.-% und 15 Gew.-% Zinkoxid oder Zirkonoxid,
zwischen 5 Gew.-% und 15 Gew.-% Calciumcarbonat,
zwischen 5 Gew.-% und 15 Gew.-% Hydroxylapatit,
zwischen 0,1 Gew.-% und 5 Gew.-% Silbernitrat,
wahlweise bis zu 10 Gew.-% Calciumfluorid,
wahlweise bis zu 15 Gew.-% Kupferoxid und
wahlweise bis zu 2 % Additive, z.B. Seltene Erden,
enthält.

11. Zusammensetzung nach Anspruch 11, ferner mit einem Gehalt zwischen 0,1 Gew.-% und 5 Gew.-% eines Tensids.

12. Vorrichtung, die mit einer Zusammensetzung nach Anspruch 11 oder 12 beschichtet ist, wobei die Vorrichtung unter den Sanitärartikeln ausgewählt ist.

## Revendications

1. Composition comprenant
entre 20 % p/p et 60 % p/p d'une solution aqueuse, de préférence de l'eau, et entre 40 % p/p et 80 % p/p de composants solides,
lesdits composants solides comprenant
entre 50 % p/p et 70 % p/p de céramique frittée,
entre 5 % p/p et 15 % p/p de kaolin,
entre 5 % p/p et 15 % p/p d'oxyde de zinc ou d'oxyde de zirconium,
entre 5 % p/p et 15 % p/p de carbonate de calcium,
entre 5 % p/p et 15 % p/p d'hydroxyapatite,
entre 0,1 % p/p et 5 % p/p de nitrate d'argent,
éventuellement jusqu'à 10 % p/p de fluorure de calcium,
éventuellement jusqu'à 15 % p/p d'oxyde de cuivre, et
éventuellement jusqu'à 2 % d'additifs, par exemple des terres rares.

2. Composition selon la revendication 1, comprenant en outre entre 0,1 et 5 % p/p d'un tensioactif.

3. Composition selon la revendication 2, dans laquelle le tensioactif est un tensioactif anionique, choisi de préférence parmi les sulfates d'alkyle, les sulfates d'alkyléther, les phosphates d'alkyle, les phosphates d'alkyléther, les oléates et leurs mélanges, de préférence choisi dans le groupe constitué par les sulfates d'alkyle, les sulfates d'alkyléther, les phosphates d'alkyle, les oléates et leurs mélanges, de préférence choisi parmi le dodécylsulfate de sodium, le décylsulfate de sodium, le tétradécylsulfate de sodium, le myrethsulfate de sodium, le parethsulfate de sodium, le laurylphosphate de sodium, l'oléate de sodium et leurs mélanges, de préférence choisis parmi le dodécylsulfate de sodium, le decylsulfate de sodium et leurs mélanges.

4. Composition selon la revendication 2, dans laquelle le tensioactif est un tensioactif cationique, choisi de préférence parmi des sels d'ammonium quaternaire chargés en permanence, plus préférentiellement choisi dans le groupe constitué par le bromure de tétradécyltriméthylammonium, le bromure d'hexadécyltriméthylammonium, le bromure de décyltriméthylammonium, le bromure de dodécyltriméthylammonium, le chlorure de tétradécyltriméthylammonium, le chlorure d'hexadécyltriméthylammonium, le chlorure de dodécyltriméthylammonium et leurs mélanges, de préférence choisi parmi le bromure d'hexadécyltriméthylammonium, le bromure de décyltriméthylammonium et leurs mélanges.

5. Composition selon la revendication 2, dans laquelle le tensioactif est un tensioactif non ionique, de préférence un ester d'acide gras de sorbitol, de préférence choisi parmi les sorbitanes, les polysorbates et leurs mélanges, encore plus préférentiellement choisi dans le groupe constitué par le monooléate de polyoxyéthylène sorbitane, le monostéarate de polyoxyéthylène sorbitane, le monopalmitate de polyoxyéthylène sorbitane, le monolaurate de polyoxyéthylène sorbitane, le monostéarate de sorbitane, le monooléate de sorbitane, le monolaurate de sorbitane, de préférence choisi parmi le monostéarate de poxyéthylène sorbitane, le monooléate de polyoxyéthylène sorbitane et leurs mélanges.

6. Composition selon la revendication 2, dans laquelle le tensioactif est un tensioactif amphotère, choisi de préférence parmi les bétaïnes, le plus préférentiellement choisi parmi la cocamidopropylbétaïne, la lécithine et leurs mélanges.

7. Composition selon l'une quelconque des revendications 2 à 6, dans laquelle le tensioactif est présent dans une quantité comprise entre 0,1 % p/p et 4,5 % p/p, de préférence entre 0,1 % p/p et 4 % p/p, de préférence entre 0,1 % p/p et 3,5 % p/p, de préférence entre 0,1 % p/p et 3 % p/p, de préférence entre 0,1 % p/p et 2,5 % p/p, de préférence entre 0,1 % p/p et 2 % p/p, de préférence entre 0,1 et 1,5 % p/p, de préférence entre 0,5 et 1,5 % p/p sur la base du poids total des composants solides.

8. Composition selon l'une quelconque des revendications 2 à 7, ayant une viscosité de 0,139 à 0,377 Kg/m/s, mesurée à l'aide d'un viscosimètre à coupelle de type Ford.

9. Composition selon l'une quelconque des revendications 1 à 8, ayant une masse volumique de 1500 à 2000 g/L, de préférence de 1600 à 1700 g/L.

10. Composition revêtue sur un dispositif, par exemple un appareil sanitaire, la composition comprenant
entre 50 % p/p et 70 % p/p de céramique frittée,
entre 5 % p/p et 15 % p/p de kaolin,
entre 5 % p/p et 15 % p/p d'oxyde de zinc ou d'oxyde de zirconium,
entre 5 % p/p et 15 % p/p de carbonate de calcium,
entre 5 % p/p et 15 % p/p d'hydroxyapatite,
entre 0,1 % p/p et 5 % p/p de nitrate d'argent,
éventuellement jusqu'à 10 % p/p de fluorure de calcium,
éventuellement jusqu'à 15 % p/p d'oxyde de cuivre, et
éventuellement jusqu'à 2 % d'additifs, par exemple des terres rares.

11. Composition selon la revendication 11, comprenant en outre entre 0,1 % p/p et 5 % p/p d'un tensioactif.

12. Dispositif revêtu d'une composition selon la revendication 11 ou 12, dans lequel le dispositif est choisi parmi les appareils sanitaires.
